# FASCICULE DE BREVET EUROPEEN

(11) **EP 1 177 637 B1**
(45) Date de publication et mention de la délivrance du brevet: **25.02.2004**
(21) Numéro de dépôt: 00925421.0
(22) Date de dépôt: 10.05.2000
(51) Int. Cl.: H04B 1/38, H02J 7/00

(54) **POSTE DE RADIOTELEPHONIE**
MOBILFUNKGERÄT
RADIOTELEPHONE SET

(30) Priorité: 12.05.1999 FR 9906107
(43) Date de publication de la demande: 06.02.2002
(73) Titulaire: ATRAL, F-38190 Crolles (FR)
(72) Inventeur: NAULEAU, Alain, F-38190 Bernin (FR)
(74) Mandataire: Casalonga, Axel
(86) Numéro de dépôt international: PCT/FR2000/001251
(87) Numéro de publication internationale: WO 2000/070778

(56) Documents cités:
- US-A- 4 363 935
- US-A- 5 849 426
- PATENT ABSTRACTS OF JAPAN vol. 012, no. 200 (E-619), 9 juin 1988 (1988-06-09) & JP 62 299161 A (RINNAI CORP), 26 décembre 1987 (1987-12-26)
- PATENT ABSTRACTS OF JAPAN vol. 015, no. 506 (E-1148), 20 décembre 1991 (1991-12-20) & JP 03 220927 A (TOSHIBA CORP), 30 septembre 1991 (1991-09-30)

## Description

La présente invention concerne un poste téléphonique qui comprend un combiné de radiotéléphonie et un support pour poser ou accrocher de façon amovible ce combiné, en particulier un poste téléphonique utilisable dans le domaine de l'interphonie.

Habituellement, les combinés téléphoniques portables sans fil renferment une batterie rechargeable pour l'alimentation de leurs circuits électriques ou électroniques.

Dans le cas d'un poste téléphonique comprenant un support relié au réseau téléphonique, le support renferme ou est associé à un transformateur que l'on branche sur le réseau électrique et qui permet de recharger la batterie du combiné lorsque ce dernier est accouplé au support. Dans le cas où le combiné constitue un téléphone portable relié à distance par voie hertzienne à des émetteurs-récepteurs, la batterie du combiné peut être rechargée en connectant le combiné portable à un transformateur que l'on branche sur le réseau électrique. Avec de telles dispositions, l'autonomie du combiné portable est limitée dans le temps de telle sorte qu'il ne faut pas oublier de reposer le combiné sur son support pour que sa batterie se recharge ou qu'il ne faut pas oublier de le connecter à un chargeur, sans quoi il devient inutilisable tant que sa batterie n'est pas rechargée.

Le but de la présente invention est de proposer un poste téléphonique de grande autonomie sans raccordement au réseau électrique.

Le poste téléphonique selon l'invention comprend un combiné muni de moyens électriques et/ou électroniques de radiotéléphonie présentant des bornes d'alimentation en énergie électrique et un support pour poser ou accrocher de façon amovible ledit combiné, ledit support et ledit combiné comprenant des moyens réciproques de positionnement et des moyens réciproques de connexion électrique qui sont en contact lorsqu'ils sont accouplés.

Selon l'invention, ledit support comprend un logement pour recevoir une première source d'énergie électrique non rechargeable et des moyens pour relier électriquement cette première source d'énergie électrique aux moyens de connexion électrique de ce support.

Selon l'invention, ledit combiné comprend un logement pour recevoir une seconde source d'énergie électrique non rechargeable, des moyens de liaison électrique comprenant des moyens de commutation qui sont reliés d'une part aux moyens de connexion électrique de ce combiné et à ladite seconde source d'énergie électrique non rechargeable et d'autre part auxdites bornes d'alimentation et qui, dans un premier état, établissent une liaison électrique entre les moyens de connexion électrique dudit combiné et lesdits moyens électriques et/ou électroniques lorsque ledit combiné est accouplé audit support et, dans un second état, établissent une liaison électrique entre ladite seconde source d'énergie électrique non rechargeable et lesdits moyens électriques et/ou électroniques lorsque ledit combiné est désaccouplé dudit support, ainsi que des moyens d'accumulation d'énergie électrique reliés aux bornes d'alimentation desdits circuits électriques ou électroniques.

Selon une variante de l'invention, lesdits moyens de commutation comprennent deux diodes montées en circuit OU entre lesdites bornes d'alimentation et respectivement lesdits moyens de connexion du combiné et un pôle de ladite seconde source d'énergie électrique non rechargeable.

Selon l'invention, en charge ou tension maximum, la tension entre les pôles de ladite première source d'énergie électrique est de préférence supérieure à la tension entre les pôles de ladite seconde source d'énergie électrique.

Selon l'invention, en charge ou tension maximum, la capacité de ladite première source d'énergie électrique est de préférence supérieure à celle de ladite seconde source d'énergie électrique.

Selon une autre variante de l'invention, lesdits moyens de commutation comprennent deux commutateurs électroniques commandés par un circuit de détection de la tension entre lesdits moyens de connexion du combiné.

Selon une autre variante de l'invention, lesdits moyens de commutation comprennent un commutateur monostable adapté pour coopérer avec ledit support et changeant d'état lorsque le combiné est accouplé audit support.

Selon l'invention, lesdits moyens d'accumulation peuvent avantageusement comprendre un condensateur branché entre lesdits pôles d'alimentation.

Selon l'invention, lesdits moyens de liaison peuvent avantageusement comprendre un circuit de détection de la tension entre lesdits moyens de connexion du combiné et délivrant un signal auxdits moyens électriques et/ou électroniques.

Selon l'invention, ledit signal peut avantageusement constituer un signal de changement de mode de fonctionnement desdits moyens électriques et/ou électroniques.

La présente invention sera mieux comprise à l'étude d'un poste téléphonique comprenant un combiné radiotéléphonique associable à un support, décrit à titre d'exemple non limitatif et illustré par le dessin sur lequel :
- la figure 1 représente une vue en perspective, plongeante, d'un poste téléphonique selon la présente invention, le combiné étant posé sur le support ;
- la figure 2 représente une vue en perspective, plongeante, du poste téléphonique de la figure 1, le combiné étant séparé du support et retourné ;
- la figure 3 représente le schéma électrique d'une variante de réalisation d'un dispositif d'alimentation en énergie électrique du poste téléphonique précité ;
- la figure 4 représente le schéma électrique d'une autre variante de réalisation d'un dispositif d'alimentation en énergie électrique du poste téléphonique précité ;
- et la figure 5 représente le schéma électrique d'une autre variante de réalisation d'un dispositif d'alimentation en énergie électrique du poste téléphonique précité.

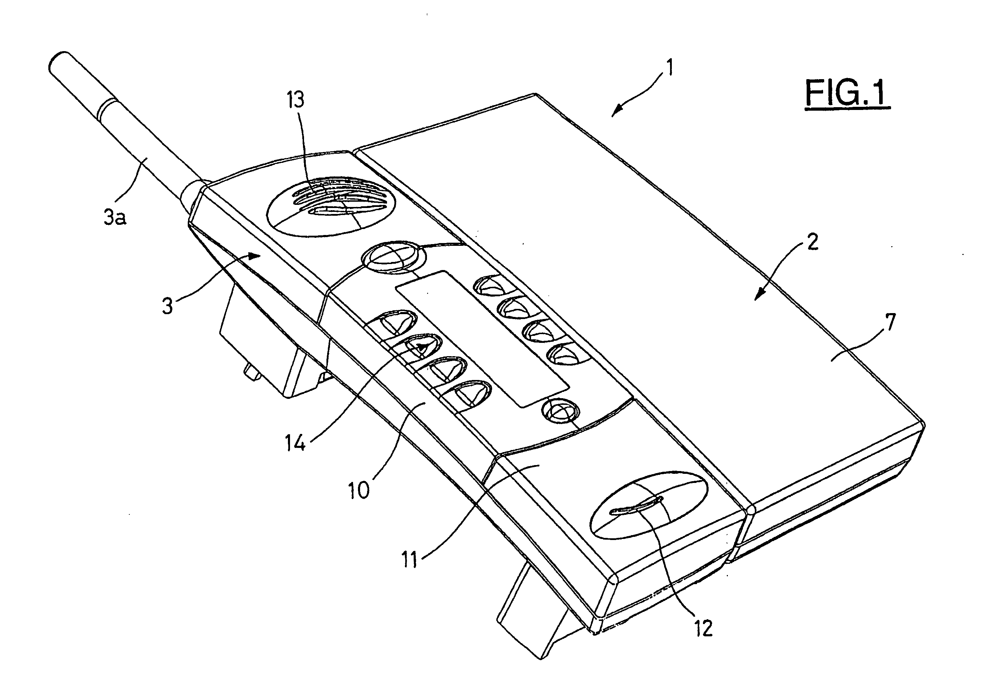

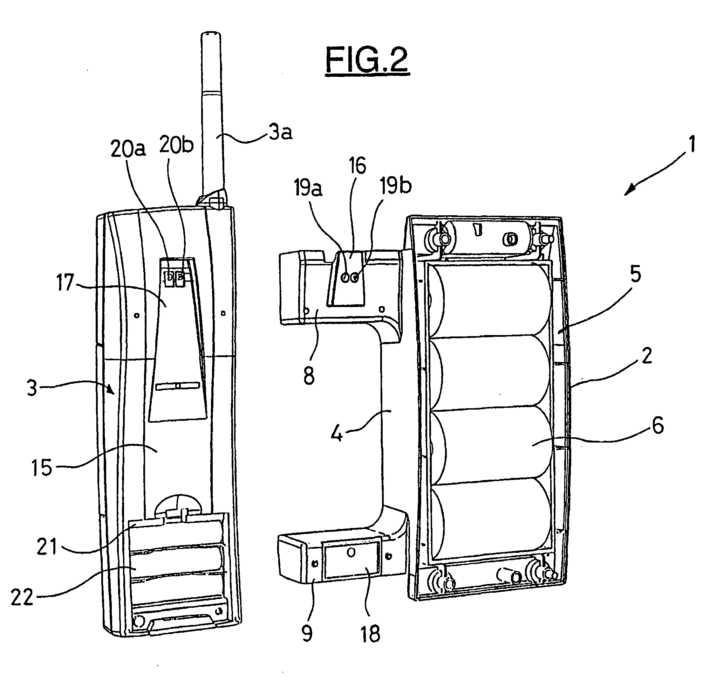

En se reportant aux figures 1 et 2, on voit qu'on a représenté un poste téléphonique 1 qui comprend un support 2 sur lequel peut être posé ou accroché de façon amovible un combiné téléphonique portable 3.

Le support 2 comprend un boîtier 4 qui présente un logement 5 qui est adapté pour recevoir une série de piles non rechargeables 6 et qui est recouvert par un couvercle 7.

Le support 2 comprend en outre deux bras parallèles 8 et 9 qui s'étendent à partir d'un côté du boîtier 4 et sur lesquels peut être installé le combiné 3.

Le combiné 3 comprend un boîtier 10 dont la face supérieure 11 présente à une extrémité une ouverture 12 en arrière de laquelle est prévu un micro 12a et à son autre extrémité une multiplicité d'ouvertures 13 en arrière desquelles est disposé un haut-parleur 13a, ainsi que, dans sa partie médiane, un clavier 14 d'entrée d'instructions ou de données, à plusieurs touches, assorti éventuellement de voyants de fonctions.

La face supérieure du bras 8 du support 2 et la face inférieure 15 du combiné 3 présentent respectivement une partie en saillie 16 et une partie en creux 17 complémentaires constituant des moyens réciproques de positionnement du combiné 3 sur le support 2. La face supérieure du bras 9 du support 2 porte une plaque métallique 18 susceptible de coopérer avec un aimant plat, non représenté, porté par la face inférieure 15 du combiné 3.

La face supérieure de la partie en saillie 16 du support 2 présente deux plots métalliques de connexion 19a et 19b reliés aux bornes de la série de piles non rechargeables 6, par exemple par des fils non représentés sur les figures 1 et 2, et sur lesquelles peuvent venir en contact deux plots de connexion métalliques et élastiques 20a et 20b prévus dans le fond de la partie en creux 17 du combiné 3 lorsque ce dernier est accouplé au support 2.

Le boîtier 15 du combiné 3 comprend un logement 21 dans lequel est disposée une série de piles non rechargeables 22, ce logement 21 étant ouvert du côté de la face inférieure 15 et étant susceptible d'être refermé par un couvercle non représenté.

A son extrémité supérieure, le boîtier 15 du combiné 3 porte une antenne 3a pour la réception et l'émission d'ondes radioélectriques.

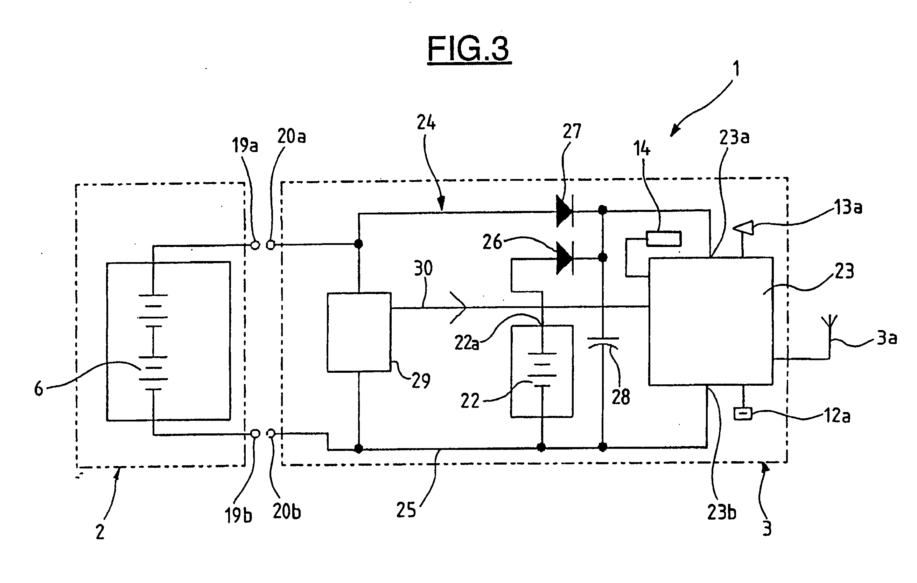

Le combiné 3 renferme un circuit électronique 23, non représenté sur les figures 1 et 2, assurant son fonctionnement conformément à un programme prédéterminé. Ce circuit électronique 23 présente deux bornes 23a et 23b d'alimentation en énergie électrique reliées aux plots de connexion 20a et 20b et aux bornes de la série de piles non rechargeables 22 par des moyens de liaison dont on va maintenant décrire des variantes de réalisation en référence aux figures 3 à 5.

Dans la variante représentée sur la figure 3, les moyens 24 de liaison électrique des plots de connexion 20a et 20b du combiné 3 aux bornes d'alimentation 23a et 23b du circuit électronique 23, comprennent une ligne électrique 25, par exemple constituée par un fil électrique, qui relie le plot de connexion 20b, le pôle (-) de la série de piles non rechargeables 22 et la borne 23b du circuit électronique 23.

Les moyens de liaison électrique 24 comprennent en outre un diode 26 dont l'entrée est reliée au pôle (+) 22a de la série de piles non rechargeables 22 et dont la sortie est reliée à la borne 23a du circuit électronique 23, ainsi qu'une diode 27 dont l'entrée est reliée au plot de connexion 20a et dont la sortie est reliée à la borne 23a du circuit électronique 23, les diodes 26 et 27 constituant des moyens de commutation de façon à constituer un montage en OU à diodes.

En outre, un moyen d'accumulation d'énergie électrique constitué par un condensateur 28 est branché entre les bornes d'alimentation 23a et 23b du circuit électronique 23.

Du point de vue de l'alimentation en énergie électrique du circuit électronique 23 de son combiné radiotéléphonique, le poste téléphonique 1 fonctionne de la manière suivante.

De préférence, en charge maximum, la tension aux bornes de la série de piles non rechargeables 6 du support 2 est supérieure à la tension aux bornes de la série de piles non rechargeables 22 du combiné 3.

Lorsque le combiné 3 est accouplé au support 2, d'une part les plots de connexion 19a et 20a sont en contact et ainsi le pôle (+) de la série de piles non rechargeables 6 du support 2 est reliée à l'entrée de la diode 27 du combiné 3 et, d'autre part, les plots de connexion 19b et 20b sont en contact et, ainsi, le pôle (-) de la série de piles non rechargeables 6 est relié à la borne d'alimentation 23b du circuit électronique 23.

La diode 27 est alors passante et la diode 26 est bloquée, de telle sorte que c'est la série de piles non rechargeables 6 du support 2 qui alimente le circuit électronique 23 du combiné 3, la série de piles non rechargeables 22 de ce dernier étant hors circuit.

Par contre, lorsque le combiné téléphonique 3 est désaccouplé du support 2, les plots 19a et 19b étant alors déconnectés des plots 20a et 20b, la diode 26 est passante et c'est la série de piles non rechargeables 22 du combiné téléphonique 3 qui alimente le circuit électronique 23.

De plus, le condensateur 28 qui est relié aux sorties des diodes 26 et 27 peut être rechargé soit par la série de piles non rechargeables 6 lorsque le combiné téléphonique 3 est accouplé au support 2, soit par la série de piles non rechargeables 22 lorsque le combiné téléphonique 3 est désaccouplé du support 2.

Le condensateur 28 constitue une réserve d'énergie électrique capable d'alimenter le circuit électronique 23 lors des changements d'alimentation décrits précédemment de telle sorte que le circuit électronique 23 ne subit aucune coupure de son alimentation en énergie électrique et peut fonctionner en continuité.

Il convient d'observer malgré tout que normalement, en fin de vie, la série de piles non rechargeables 6 du support 2 et de la série de piles non rechargeables 22 du combiné 3 peuvent être amenées à délivrer des tensions identiques. Dans ce cas, uniquement lorsque le combiné 3 est accouplé au support 2, les diodes 26 et 27 sont simultanément passantes, de telle sorte que la série de piles non rechargeables 6 et la série de piles non rechargeables 22 alimentent simultanément le circuit électronique 23.

Par ailleurs, les moyens de liaison électrique 24 comprennent de préférence un circuit 29 de détection de la tension entre les plots de connexion 20a et 20b. Ce circuit de détection 29 est relié à une entrée du circuit électronique 23 par une ligne 30 de façon à délivrer des signaux à ce circuit électronique 23 correspondant par exemple à la présence ou l'absence d'une tension entre les plots de connexion 20a et 20b, signifiant que le combiné 3 est accouplé ou désaccouplé du support 2, et/ou correspondant à la valeur de cette tension en vue par exemple d'informer l'utilisateur du niveau de charge de la série de piles non rechargeables 6 pour lui signifier notamment que ces piles 6 sont arrivées en fin de vie. Le signal délivré par le circuit de détection 29 peut également provoquer un changement de mode de fonctionnement du circuit 23 lorsqu'il change d'état.

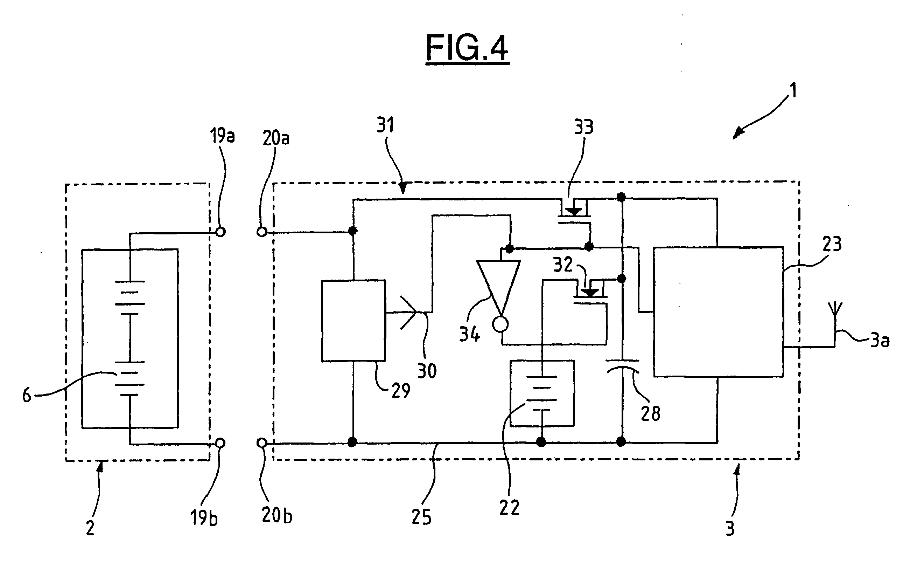

En se reportant à la figure 4, on voit qu'on a représenté des moyens de liaison électrique 31 qui se différencient des moyens de liaison 24 décrits précédemment en référence à la figure 3 par le fait que les diodes 26 et 27 sont remplacées par des commutateurs électroniques 32 et 33, par exemple de type MOS, qui sont commandés par le signal de sortie du détecteur de tension 29, qui délivre un signal de présence ou d'absence d'une tension entre les plots de connexion 20a et 20b.

La ligne 30 de sortie du détecteur de tension 29 est directement reliée à l'entrée de commande du commutateur électronique 33 et est reliée à l'entrée de commande du commutateur électronique 32 par l'intermédiaire d'une porte inverseuse 34.

Comme dans l'exemple précédent, lorsque le combiné téléphonique 3 est accouplé au support 2, le détecteur de tension 29 détecte une tension entre les plots de connexion 20a et 20b issue de la série de piles non rechargeables 6 du support 2, rendant passant le commutateur électronique 33 et bloquant le commutateur électronique 32. La série de piles non rechargeables 6 alimente alors le circuit électronique 23 tandis que la série de piles non rechargeables 22 du combiné téléphonique 3 est hors circuit.

Lorsque le combiné téléphonique 3 est désaccouplé du support 2, le circuit 29 ne détecte pas de tension et change d'état, ce changement d'état provoquant un changement d'état de la porte inverseuse 33 tel que le commutateur électronique 32 est fermé, le commutateur électronique 33 étant ouvert. C'est donc la série de piles non rechargeable 22 du combiné téléphonique 3 qui alimente le circuit électronique 23.

Comme précédemment, le condensateur 28 constitue une réserve d'énergie électrique alimentant le circuit électronique 23 en particulier lors des changements d'état des commutateurs électroniques 32 et 33, évitant ainsi toute coupure de l'alimentation du circuit électronique 23.

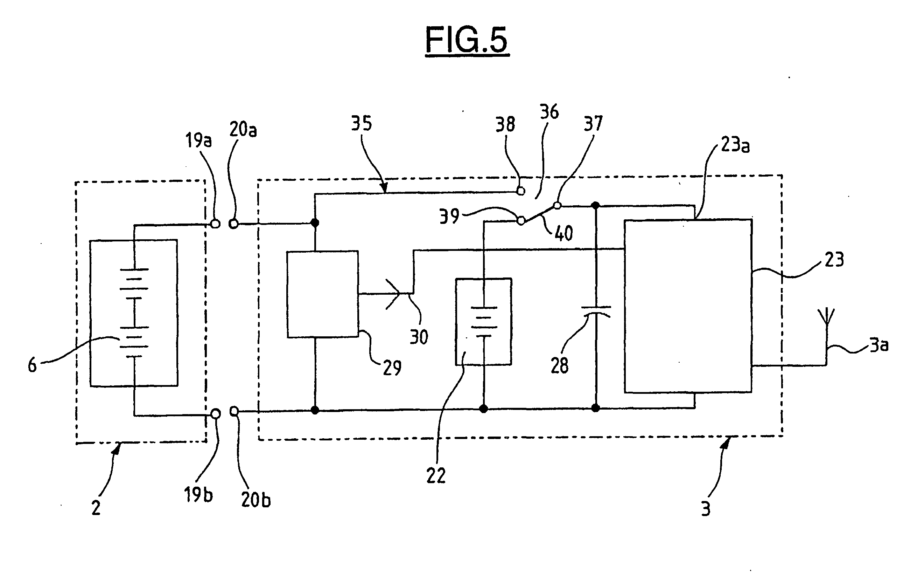

En se reportant à la figure 5, on voit qu'on a représenté des moyens de liaison électriques 35 qui se différencient des moyens de liaison 24 décrits précédemment en référence à la figure 3 par le fait que les deux diodes 26 et 27 sont remplacées par un commutateur monostable 36 dont le plot commun 37 est relié à la borne d'alimentation 23a du circuit électronique 23 et dont les plots opposés 38 et 39 sont respectivement reliés aux plots de connexion 20a et au pôle (+) de la série de piles non rechargeables 22 du combiné téléphonique 3.

Ce commutateur mécanique 36 présente un doigt d'actionnement 40 soumis à un ressort non représenté qui est susceptible d'être actionné à l'encontre de ce ressort lorsqu'il entre en contact avec une partie du support 2, et ce afin de changer d'état.

Lorsque le combiné téléphonique 3 est désaccouplé du support 2, les plots 37 et 39 sont reliés et la série de piles non rechargeables 22 alimente le circuit électronique 23. Lorsque le combiné téléphonique 3 est accouplé au support 2, le bras 40 est actionné de telle sorte que les plots 37 et 38 sont reliés, la série de piles non rechargeables 6 alimentant alors le circuit électronique 23.

Comme précédemment, le condensateur 28 constitue une réserve d'énergie électrique évitant toute coupure d'alimentation en énergie électrique du circuit électronique 23, en particulier lorsque le commutateur mécanique 36 change d'état.

Le poste téléphonique 1 qui vient d'être décrit est particulièrement adapté pour économiser la série de piles 22 du combiné 3. En effet, l'utilisateur peut laisser le combiné 3 posé sur le support 2 lorsque ce combiné est en veille. En cas de communication téléphonique reçue ou émise, l'utilisateur peut se servir du combiné en main libre, avec amplification du son par le haut-parleur 13a induit par le détecteur de tension 29. Ainsi, la série de piles 22 n'est sollicitée que lorsque l'utilisateur se sert du combiné 3 décroché du support 2, avec un niveau sonore réduit du haut-parleur 13a induit par le détecteur de tension 29.

Dans une application particulière, le poste téléphonique 1 est particulièrement adapté pour constituer un interphone domestique qui est, normalement, peu utilisé.

## Revendications

1. Poste téléphonique comprenant un combiné (3) muni de moyens électriques et/ou électroniques de radiotéléphonie présentant des bornes (23a, 23b) d'alimentation en énergie électrique et un support (2) pour poser ou accrocher de façon amovible ledit combiné, ledit support et ledit combiné comprenant des moyens réciproques de positionnement et des moyens réciproques de connexion électrique qui sont en contact lorsqu'ils sont accouplés, **caractérisé par le fait que** :
ledit support (2) comprend un logement (5) pour recevoir une première source d'énergie électrique (6) non rechargeable et des moyens pour relier électriquement cette première source d'énergie électrique aux moyens (19a, 19b) de connexion électrique de ce support,
et que ledit combiné (3) comprend :
- un logement (21) pour recevoir une seconde source d'énergie électrique (22) non rechargeable,
- des moyens de liaison électrique (24) comprenant des moyens de commutation (26, 27) qui sont reliés d'une part aux moyens de connexion électrique (20a, 20b) de ce combiné et à ladite seconde source d'énergie (22) électrique non rechargeable et d'autre part auxdites bornes d'alimentation (23a, 23b) et qui, dans un premier état, établissent une liaison électrique entre les moyens de connexion électrique dudit combiné et lesdits moyens électriques et/ou électroniques (23) lorsque ledit combiné est accouplé audit support et, dans un second état, établissent une liaison électrique entre ladite seconde source d'énergie électrique non rechargeable et lesdits moyens électriques et/ou électroniques (23) lorsque ledit combiné est désaccouplé dudit support,
- ainsi que des moyens (28) d'accumulation d'énergie électrique reliés aux bornes d'alimentation (23a, 23b) desdits moyens électriques et/ou électroniques (23).

2. Poste selon la revendication 1, **caractérisé par le fait que** lesdits moyens de commutation comprennent deux diodes (26, 27) montées en circuit OU entre l'une (23a) desdites bornes d'alimentation et respectivement l'un (20a) desdits moyens de connexion du combiné (3) et une pôle (22a) de ladite seconde source d'énergie électrique (22) non rechargeable.

3. Poste selon la revendication 2, **caractérisé par le fait qu'**en charge ou tension maximum, la tension entre les pôles de ladite première source d'énergie électrique (6) est supérieure à la tension entre les pôles de ladite seconde source d'énergie électrique (22).

4. Poste selon la revendication 2, **caractérisé par le fait qu'**en charge ou tension maximum, la capacité de ladite première source d'énergie électrique (6) est supérieure à celle de ladite seconde source d'énergie électrique (22).

5. Poste selon la revendication 1, **caractérisé par le fait que** lesdits moyens de commutation comprennent deux commutateurs électroniques (32, 33) commandés par un circuit de détection (29) de la tension entre lesdits moyens de connexion (20a, 20b) du combiné (3).

6. Poste selon la revendication 1, **caractérisé par le fait que** lesdits moyens de commutation comprennent un commutateur monostable (36) adapté pour coopérer avec ledit support (2) et changeant d'état lorsque le combiné (3) est accouplé audit support.

7. Poste selon la revendication 1, **caractérisé par le fait que** lesdits moyens d'accumulation comprennent un condensateur (28) branché entre lesdites bornes d'alimentation (23a, 23b).

8. Poste selon la revendication 1, **caractérisé par le fait que** lesdits moyens de liaison comprennent un circuit de détection (29) de la tension entre lesdits moyens de connexion (20a, 20b) du combiné et délivrant un signal auxdits moyens électriques et/ou électroniques.

9. Poste selon la revendication 8, **caractérisé par le fait que** ledit signal constitue un signal de changement de mode de fonctionnement desdits moyens électriques et/ou électroniques (23).

## Patentansprüche

1. Fernsprechgerät mit einem Handapparat (3) mit elektrischen und/oder elektronischen Mobilfunkmitteln, die Anschlüsse (23a, 23b) zur Zuführung elektrischer Energie aufweisen, und einem Träger (2) zum abnehmbaren Ablegen oder Einhängen des Handapparats, wobei der Träger und der Handapparat wechselseitige Positionierungsmittel und wechselseitige elektrische Verbindungsmittel umfassen, die in Kontakt sind, wenn sie gekoppelt sind, **dadurch gekennzeichnet, dass**:
der Träger (2) eine Aufnahme (5) zum Aufnehmen einer ersten nicht wiederaufladbaren elektrischen Energiequelle (6) und Mittel zum elektrischen Verbinden dieser ersten elektrischen Energiequelle mit elektrischen Verbindungsmitteln (19a, 19b) dieses Trägers umfasst, und dass der Handapparat (3) folgendes umfasst:
- eine Aufnahme (21) zum Aufnehmen einer zweiten nicht wiederaufladbaren elektrischen Energiequelle (22),
- elektrische Verbindungsmittel (24), die Umschaltmittel (26, 27) umfassen, die einerseits mit den elektrischen Verbindungsmitteln (20a, 20b) dieses Handapparats und mit der zweiten nicht wiederaufladbaren elektrischen Energiequelle (22) und andererseits mit den Zuführungsanschlüssen (23a, 23b) verbunden sind und die in einem ersten Zustand eine elektrische Verbindung zwischen den elektrischen Verbindungsmitteln des Handapparats und den elektrischen und/oder elektronischen Mitteln (23) herstellen, wenn der Handapparat an den Träger angekoppelt ist, und in einem zweiten Zustand eine elektrische Verbindung zwischen der zweiten nicht wiederaufladbaren elektrischen Energiequelle und den elektrischen und/oder elektronischen Mitteln (23) herstellen, wenn der Handapparat von dem Träger abgekoppelt ist,
- und mit den Zuführungsanschlüssen (23a, 23b) der elektrischen und/oder elektronischen Mittel (23) verbundene elektrische Energiespeichermittel (28).

2. Gerät nach Anspruch 1, **dadurch gekennzeichnet, dass** die Umschaltmittel zwei Dioden (26, 27) umfassen, die in einer ODER-Schaltung zwischen einem (23a) der Zuführungsanschlüsse und jeweils einem (20a) der Verbindungsmittel des Handapparats (3) und einem Pol (22a) der nicht wiederaufladbaren zweiten elektrischen Energiequelle (22) angebracht sind.

3. Gerät nach Anspruch 2, **dadurch gekennzeichnet, dass** bei maximaler Ladung oder Spannung die Spannung zwischen den Polen der ersten elektrischen Energiequelle (6) höher als die Spannung zwischen den Polen der zweiten elektrischen Energiequelle (22) ist.

4. Gerät nach Anspruch 2, **dadurch gekennzeichnet, dass** bei maximaler Ladung oder Spannung die Kapazität der ersten elektrischen Energiequelle (6) größer als die der zweiten elektrischen Energiequelle (22) ist.

5. Gerät nach Anspruch 1, **dadurch gekennzeichnet, dass** die Umschaltmittel zwei elektronische Umschalter (32, 33) umfassen, die von einer Erkennungsschaltung (29) der Spannung zwischen den Verbindungsmitteln (20a, 20b) des Handapparats (3) angesteuert werden.

6. Gerät nach Anspruch 1, **dadurch gekennzeichnet, dass** die Umschaltmittel einen monostabilen Umschalter (36) umfassen, der zum Zusammenarbeiten mit dem Träger (2) geeignet ist und den Zustand ändert, wenn der Handapparat (3) an den Träger angekoppelt ist.

7. Gerät nach Anspruch 1, **dadurch gekennzeichnet, dass** die Speichermittel einen Kondensator (28) umfassen, der zwischen die Zuführungsanschlüsse (23a, 23b) geschaltet ist.

8. Gerät nach Anspruch 1, **dadurch gekennzeichnet, dass** die Verbindungsmittel eine Erkennungsschaltung (29) der Spannung zwischen den Verbindungsmitteln (20a, 20b) des Handapparats umfassen und ein Signal zu den elektrischen und/oder elektronischen Mitteln liefern.

9. Gerät nach Anspruch 8, **dadurch gekennzeichnet, dass** das Signal ein Betriebsartänderungssignal der elektrischen und/oder elektronischen Mittel (23) darstellt.

## Claims

1. Telephone instrument comprising a handset (3) equipped with electrical and/or electronic radio-telephone means featuring electrical-energy supply terminals (23a, 23b) and a support (2) for setting down or hanging up said handset so that it is removable, said support and said handset comprising reciprocal positioning means and reciprocal electrical-connection means which are in contact when they are coupled together, **characterized in that**:
said support (2) comprises a housing (5) for accommodating a first non-rechargeable electrical-energy source (6) and means for electrically linking this first electrical-energy source to the electrical-connection means (19a, 19b) of this support,
and **in that** said handset (3) comprises:
- a housing (21) for accommodating a second non-rechargeable electrical-energy source (22),
- electrical-linking means (24) comprising changeover-switching means (26, 27) which are linked, on the one hand, to the electrical-connection means (20a, 20b) of this handset and to said second non-rechargeable electrical-energy source (22) and, on the other hand, to said supply terminals (23a, 23b) and which, in a first state, establish an electrical link between the electrical-connection means of said handset and said electrical and/or electronic means (23) when said handset is coupled to said support and, in a second state, establish an electrical link between said second non-rechargeable electrical-energy source and said electrical and/or electronic means (23) when said handset is uncoupled from said support,
- as well as electrical-energy accumulation means (28) which are linked to the supply terminals (23a, 23b) of said electrical and/or electronic means (23).

2. Instrument according to Claim 1, **characterized in that** said changeover-switching means comprise two diodes (26, 27) mounted as an OR circuit between one (23a) of said supply terminals and respectively one (20a) of said connection means of the handset (3) and one pole (22a) of said second non-rechargeable electrical-energy source (22).

3. Instrument according to Claim 2, **characterized in that**, on load or at maximum voltage, the voltage between the poles of said first electrical-energy source (6) is higher than the voltage between the poles of said second electrical-energy source (22).

4. Instrument according to Claim 2, **characterized in that**, on load or at maximum voltage, the capacity of said first electrical-energy source (6) is greater than that of said second electrical-energy source (22).

5. Instrument according to Claim 1, **characterized in that** said changeover-switching means comprise two electronic changeover switches (32, 33) controlled by a circuit (29) for detecting the voltage between said connection means (20a, 20b) of the handset (3).

6. Instrument according to Claim 1, **characterized in that** said changeover-switching means comprise a monostable changeover switch (36) suitable for interacting with said support (2) and changing state when the handset (3) is coupled onto said support.

7. Instrument according to Claim 1, **characterized in that** said accumulation means comprise a capacitor (28) connected between said supply terminals (23a, 23b).

8. Instrument according to Claim 1, **characterized in that** said linking means comprise a circuit (29) for detecting the voltage between said connection means (20a, 20b) of the handset and delivering a signal to said electrical and/or electronic means.

9. Instrument according to Claim 8, **characterized in that** said signal constitutes a signal for changing operating mode of said electrical and/or electronic means (23).
